# EUROPEAN PATENT APPLICATION

(11) **EP 2 590 175 A1**
(43) Date of publication of application: **08.05.2013**
(21) Application number: 11800816.8
(22) Date of filing: 28.06.2011
(51) Int. Cl.: G21C 17/00, G05B 23/02

(54) **DEVICE FOR MONITORING OPERATION OF NUCLEAR POWER PLANT**

(30) Priority: 01.07.2010 JP 2010151459
(71) Applicant: Mitsubishi Heavy Industries, Ltd., Tokyo 108-8215 (JP)
(72) Inventor: NAKABAYASHI, Toshiharu, Tokyo 108-8215 (JP)
(74) Representative: HOFFMANN EITLE
(86) International application number: PCT/JP2011/064735
(87) International publication number: WO 2012/002352

(57) **Abstract**

An operation panel (31) having a plurality of operation switches (32, 33) operable by an operator; a control device (34) that can control driving of an A pump (36) and a B on-off valve (37) as devices in a nuclear power plant in response to an operation of the operation switch (32, 33); and a sound output device (38) that outputs a name of the A pump (36) or the B on-off valve (37) as a device corresponding to an operation switch (32, 33) selected by the operation panel (31) as sound, thereby enabling to suppress occurrence of erroneous operations in the nuclear power plant, so that highly safe operations can be ensured.

## Description

### Field

The present invention relates to an operation monitoring apparatus of a nuclear power plant that can operate various facilities in a nuclear power plant. Background

To operate a nuclear power plant stably, an easily operable instrumentation control system having high reliability is required. To ensure such an instrumentation control system, application of a soft-operation type central control panel and digitization of a control system and a protection system facility are essential. In the instrumentation control system in a nuclear power plant, a central control panel that monitors operations of the plant by an operator is provided, and a plurality of operators who monitor operations of the central control panel are positioned with respect to the central control panel and a shift supervisor is positioned behind these operators. Each of these operators performs reliable monitoring and operations under various supervisions and commands of the shift supervisor, thereby ensuring safe operations of the nuclear power plant.

In this case, conventionally, at the time of performing operations of various devices, in order to prevent erroneous operations (human errors), the operator points the operation device and calls the name of the device thereby avoiding misunderstanding of the operated device, or calls an operation direction or an operation result thereby avoiding misunderstanding of operation contents.

The following Patent Literature 1 describes an example of an operation monitoring apparatus of a nuclear power plant.

### Citation List

### Patent Literature

Patent Literature 1: Japanese Patent Application Laid-open No. H07-087579

### Summary

### Technical Problem

As described above, when an operator operates various devices, the operator prevents erroneous operations of the devices by performing pointing and calling as well as pointing and confirming. However, even with these procedures, erroneous operations cannot be eliminated completely, and thus further prevention measures of erroneous operations have been desired.

The present invention has been achieved to solve the above problems, and an object of the present invention is to provide an operation monitoring apparatus of a nuclear power plant that can ensure highly safe operations by suppressing occurrence of erroneous operations in the nuclear power plant.

### Solution to Problem

According to an aspect of the present invention, an operation monitoring apparatus of a nuclear power plant includes: an operation panel having a plurality of operable operation switches; a control device that can control driving of devices in a nuclear power plant in response to an operation of the operation switch; and a sound output device that outputs a name of a device corresponding to an operation switch selected by the operation panel as sound.

Accordingly, when a predetermined operation switch is selected on the operation panel, the sound output device outputs the name of the device corresponding to the selected operation switch as sound, and thus an operator can confirm that the operation switch selected by him is appropriate, occurrence of erroneous operations in the nuclear power plant can be suppressed, and highly safe operations can be ensured.

Advantageously, in the operation monitoring apparatus of a nuclear power plant, the sound output device outputs a state of the device corresponding to a selected operation switch as sound.

Accordingly, when a predetermined operation switch is selected, the sound output device outputs the state of the device corresponding to the selected operation switch as sound, and thus an operator can confirm the state of the device to be operated by him, and occurrence of erroneous operations in the nuclear power plant can be suppressed.

Advantageously, in the operation monitoring apparatus of a nuclear power plant, the sound output device outputs an operation content of the operated operation switch as sound.

Accordingly, when a predetermined operation switch is selected, the sound output device outputs the operation content of the operated operation switch as sound, and thus an operator can confirm the content operated by him, and occurrence of erroneous operations in the nuclear power plant can be suppressed.

Advantageously, in the operation monitoring apparatus of a nuclear power plant, the sound output device outputs a result of drive control of the device performed by the control device in response to the operated operation switch as sound.

Accordingly, after a predetermined operation switch is operated, the sound output device outputs the result of drive control of the device performed by the control device in response to an operation of the operation switch. With this configuration, an operator can confirm the drive control result of the device operated by him, and occurrence of erroneous operations in the nuclear power plant can be suppressed.

Advantageously, in the operation monitoring apparatus of a nuclear power plant, the sound output device outputs sound after a preset predetermined time has passed since an operation of the operation switch.

Accordingly, when a predetermined operation switch is operated, the sound output device outputs various types of information as sound after a predetermined time has passed since an operation of the operation switch, thereby enabling to suppress a frequent sound output and to improve the operability.

### Advantageous Effects of Invention

According to the operation monitoring apparatus of a nuclear power plant of the present invention, a sound output device that outputs a name of a device corresponding to an operation switch selected by an operation panel is provided, and thus occurrence of erroneous operations in a nuclear power plant can be suppressed and highly safe operations can be ensured.

### Brief Description of Drawings

FIG. 1 is a schematic diagram of a control block in an operation monitoring apparatus of a nuclear power plant according to an embodiment of the present invention.
FIG. 2 is a schematic diagram of an operation performed by the operation monitoring apparatus of a nuclear power plant according to the embodiment.
FIG. 3 is a schematic diagram of a central control room in the operation monitoring apparatus of a nuclear power plant according to the embodiment.
FIG. 4 is a schematic diagram of a first operation surveillance monitor and a second operation surveillance monitor in the operation monitoring apparatus of a nuclear power plant according to the embodiment.

### Description of Embodiments

Exemplary embodiments of an operation monitoring apparatus of a nuclear power plant according to the present invention will be explained below in detail with reference to the accompanying drawings. The present invention is not limited to the embodiments.

### Embodiment

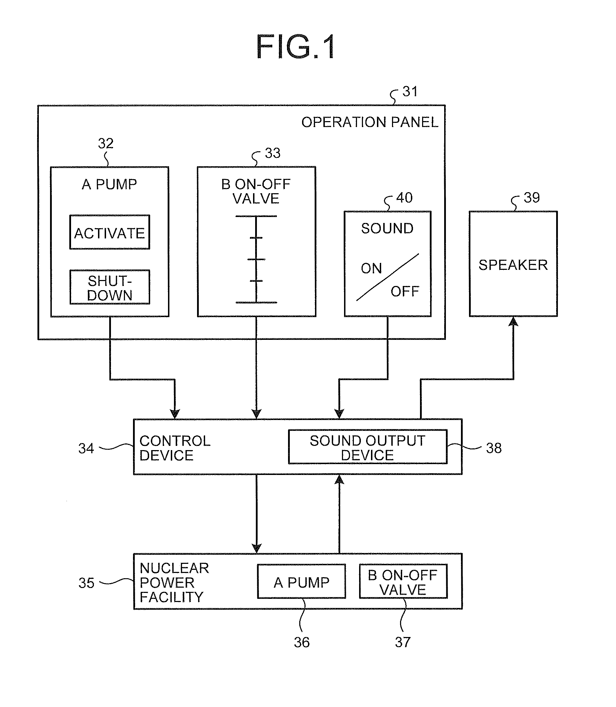

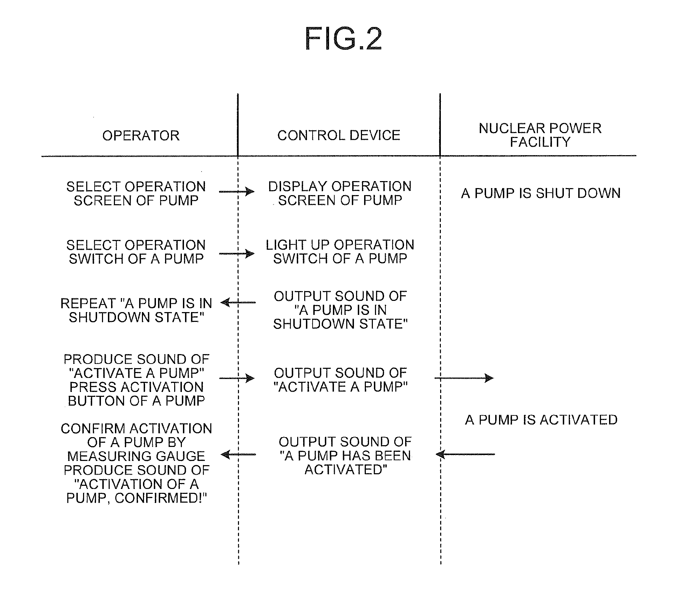

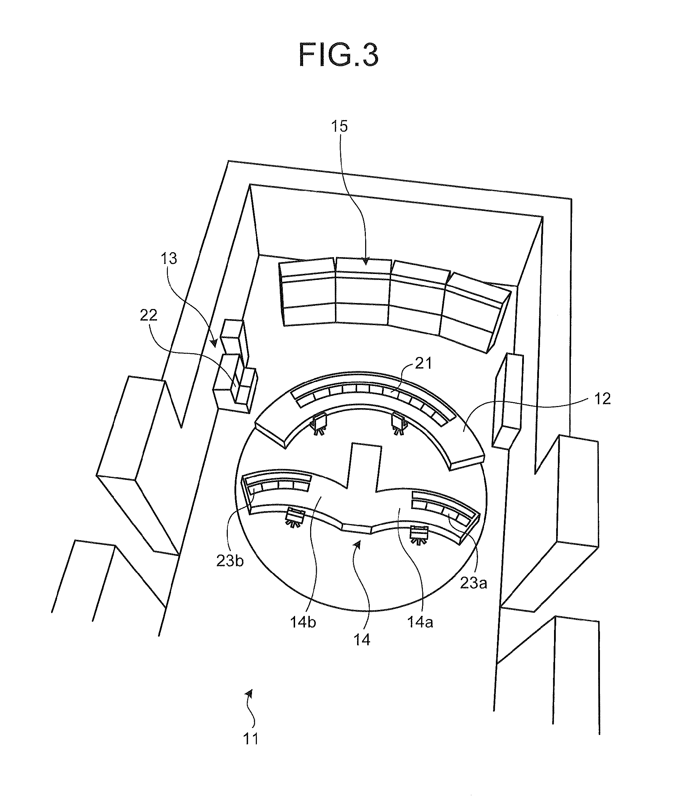

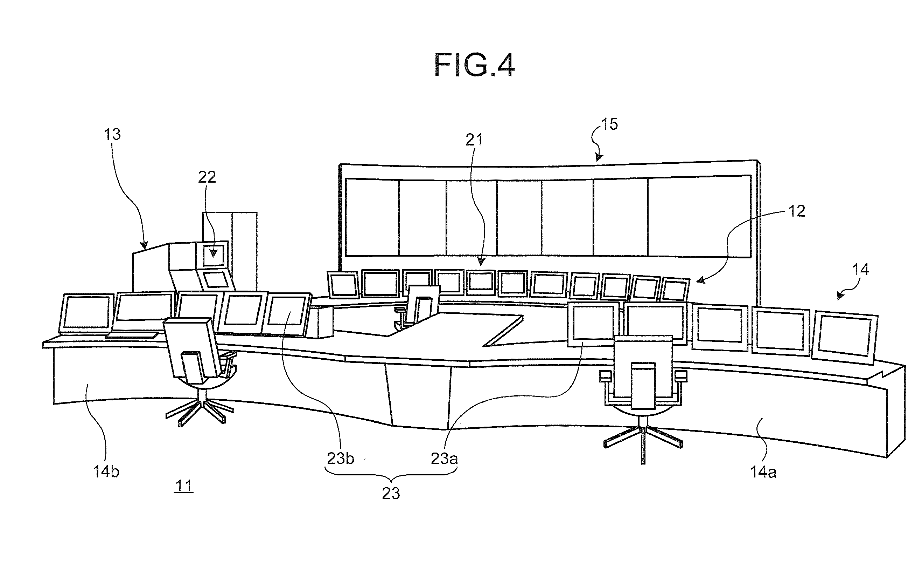

FIG. 1 is a schematic diagram of a control block in an operation monitoring apparatus of a nuclear power plant according to an embodiment of the present invention. FIG. 2 is a schematic diagram of an operation performed by the operation monitoring apparatus of a nuclear power plant according to the present embodiment. FIG. 3 is a schematic diagram of a central control room in the operation monitoring apparatus of a nuclear power plant according to the present embodiment. FIG. 4 is a schematic diagram of a first operation surveillance monitor and a second operation surveillance monitor in the operation monitoring apparatus of a nuclear power plant according to the present embodiment.

In the operation monitoring apparatus of a nuclear power plant according to the present embodiment, as shown in FIGS. 3 and 4, a central control room 11 is a substantially hermetically-closed room, and a first operation console 12, a second operation console 13, an administrator console 14, and a large display 15 are arranged therein. In this case, the large display 15 is arranged at the front, and the first operation console 12 is arranged at the back of the large display 15 to face the front surface of the large display 15. The second operation console 13 is arranged adjacent to the first operation console 12 on the wall of the central control room 11. The administrator console 14 is arranged to face the front surface of the large display 15 at the back of the first operation console 12.

That is, in the central control room 11, the first operation console 12 and the administrator console 14 are arranged at the center of the central control room 11, and the second operation console 13 is arranged adjacent to the first operation console 12 near the wall surface of the central control room 11. Specifically, the administrator console 14 is arranged substantially at the center of a circle drawn at the center of the central control room 11, and the first operation console 12 is arranged to form a circular arc on a side of the large display 15 in the circle. The second operation console 13 is arranged outside of the circle, in close contact with the wall surface of the central control room 11.

A first operation surveillance monitor 21 is mounted on the first operation console 12, and a second operation surveillance monitor 22 is mounted on the second operation console 13. The first operation surveillance monitor 21 has a custom-system control function to monitor the operation of the plant when the plant is in a normal state, and a safety-protection-system control function to shut down the plant safely when the plant is in an abnormal state. Meanwhile, the second operation surveillance monitor 22 is a backup monitor of the safety-protection-system control function in the first operation surveillance monitor 21, and has a safety-protection-system control function to shut down the plant safely when the plant is in an abnormal state.

The first operation console 12 (the first operation surveillance monitor 21) and the second operation console 13 (the second operation surveillance monitor 22) are operated by an operator. Meanwhile, the administrator console 14 is operated by the shift supervisor who issues commands to operators, and mounted with an administrator's monitor 23. In the present embodiment, the administrator console 14 is constituted by a supervising command console 14a (a supervisor's monitor 23a) and a technical command console 14b (an engineer's monitor 23b).

For example, in the operation monitoring apparatus of a nuclear power plant according to the present embodiment constituted as described above, as shown in FIG. 1, the first operation surveillance monitor 21 of the first operation console 12 has an operation panel 31, and a plurality of operable operation switches 32 and 33 (two switches are shown in FIG. 1) are provided on the operation panel 31. The first operation surveillance monitor 21 includes a control device 34, and the control device 34 can control driving of devices constituting a nuclear power facility 35, for example, an A pump 36 or a B on-off valve 37, in response to the operation of the operation switches 32 and 33 on the operation panel 31.

The control device 34 includes a sound output device 38 that outputs the name of the device corresponding to the operation switch 32 or 33 selected by the operation panel 31, that is, the A pump 36 or the B on-off valve 37 as sound, and a speaker 39 is connected thereto. In this case, a sound change-over switch (ON/OFF) 40 that selects whether to output sound from the speaker 39 by the sound output device 38 is provided on the operation panel 31.

The sound output device 38 can output the state of the device corresponding to the selected operation switch 32 or 33, that is, the A pump 36 or the B on-off valve 37 as sound from the speaker 39. In this case, the state of the device indicates shutdown or activating (driving) of the A pump 36, or opening and closing or an aperture of the B on-off valve 37.

The sound output device 38 can also output an operation content of the operated operation switch 32 or 33 as sound from the speaker 39. In this case, the operation content indicates shutdown or activating of the A pump 36, or opening and closing or an aperture of the B on-off valve 37.

Furthermore, the sound output device 38 can output a result of drive control of the device such as the A pump 36 or the B on-off valve 37 executed by the control device 34 in response to the operated operation switch 32 or 33 as sound from the speaker 39. In this case, the drive control result indicates shutdown or activating of the A pump 36, or opening and closing or an aperture of the B on-off valve 37.

Further, the sound output device 38 can output sound from the speaker 39 after a preset predetermined time has passed since an operation of the operation switch 33. In this case, the operation switch 33 is a slide switch (or can be a rotation switch) for setting an aperture of the B on-off valve 37. During an operation by an operator, the sound output device 38 does not output anything from the speaker 39, and after the operation by the operator has finished and a predetermined time (for example, 3 seconds) has passed, the sound output device 38 outputs the operation content or the like of the B on-off valve 37 from the speaker 39.

In the operation monitoring apparatus of a nuclear power plant according to the present embodiment constituted as described above, the operator performs an operation of the A pump 36 or the B on-off valve 37 in the nuclear power facility by the control device 34 by pointing and calling by using the operation switches 32 and 33 on the operation panel 31. The operation of the A pump 36 performed by an operator by using the operation switch 32 is explained below.

In the operation of the A pump 36 performed by an operator by using the operation switch 32, as shown in FIGS. 1 and 2, the operator first operates the operation panel 31 to select an operation screen of various pumps. The control device 34 then displays the operation screen of the various pumps in response to the operation performed by the operator. When the operator selects the operation switch 32 of the A pump 36, the control device 34 lights up the operation switch 32 of the A pump 36 in response to the operation performed by the operator, and outputs the state of the A pump 36 by sound from the speaker 39, such as "A pump is in shutdown state".

In this state, after repeating "A pump is in shutdown state", the operator performs pointing and calling "Activate A pump", and presses an activation button in the operation switch 32 of the A pump 36. The control device 34 then outputs "Activate A pump" by sound, from the speaker 39 to activate the A pump 36. When the A pump 36 of the nuclear power facility 35 is activated, the control device 34 outputs "A pump has been activated" by sound, from the speaker 39 to indicate that the A pump 36 has been activated. The operator confirms that the A pump 36 has been activated by using a measuring gauge, and performs pointing and calling "Activation of A pump, confirmed". In this case, the activation of the A pump 36 can be confirmed by an increase in pressure or flow rate.

While an operation of the A pump 36 by using the operation switch 32 performed by an operator has been explained, an operation of the B on-off valve 37 by using the operation switch 33 is performed in the same manner. However, because the operation switch 33 is a slide switch to set the aperture of the B on-off valve 37, when the operation by an operator has finished and a predetermined time has passed, the sound output device 38 outputs an operation content or the like of the B on-off valve 37 from the speaker 39.

In this manner, the operation monitoring apparatus of a nuclear power plant according to the present embodiment includes the operation panel 31 having the operation switches 32 and 33 operable by an operator, the control device 34 that can control driving of devices (the A pump 36 and the B on-off valve 37) of the nuclear power plant in response to an operation of the operation switches 32 and 33, and the sound output device 38 that outputs the name of the device (the A pump 36 or the B on-off valve 37) corresponding to the operation switch 32 or 33 selected by the operation panel 31 as sound.

Accordingly, when a predetermined operation switch 32 or 33 is selected by the operation panel 31, the sound output device 38 outputs the name of the A pump 36 or the B on-off valve 37 corresponding to the selected operation switch 32 or 33 as sound. Therefore, an operator can confirm that the operation switch 32 or 33 selected by him is appropriate, occurrence of erroneous operations in the nuclear power plant can be suppressed, and highly safe operations can be ensured.

In the operation monitoring apparatus of a nuclear power plant according to the present embodiment, the sound output device 38 outputs the state of the device (the A pump 36 or the B on-off valve 37) corresponding to the selected operation switch 32 or 33 as sound. Accordingly, when the predetermined operation switch 32 or 33 is selected, the sound output device 38 outputs the state of the A pump 36 or the B on-off valve 37 corresponding to the selected operation switch 32 or 33 as sound. Therefore, an operator can confirm the state of the device to be operated by him, and occurrence of erroneous operations in the nuclear power plant can be suppressed.

In the operation monitoring apparatus of a nuclear power plant according to the present embodiment, the sound output device 38 outputs an operation content of the operated operation switch 32 or 33 as sound. Accordingly, when the predetermined operation switch 32 or 33 is operated, the sound output device 38 outputs the operation content of the operated operation switch 32 or 33 as sound. Therefore, an operator can confirm the content of operations performed by him, and occurrence of erroneous operations in the nuclear power plant can be suppressed.

In the operation monitoring apparatus of a nuclear power plant according to the present embodiment, the sound output device 38 outputs the result of drive control of the device (the A pump 36 or the B on-off valve 37) performed by the control device 34 corresponding to the operated operation switch 32 or 33 as sound. Accordingly, after the predetermined operation switch 32 or 33 is operated, the sound output device 38 outputs the result of drive control of the A pump 36 or the B on-off valve 37 performed by the control device 34 corresponding to the operated operation switch 32 or 33 as sound. Therefore, an operator can confirm the result of drive control of the device operated by him, and occurrence of erroneous operations in the nuclear power plant can be suppressed.

In the operation monitoring apparatus of a nuclear power plant according to the present embodiment, the sound output device outputs sound after a preset predetermined time has passed since an operation of the operation switch 32 or 33. Accordingly, when the predetermined operation switch 32 or 33 is operated, the sound output device 38 outputs various types of information as sound, after a predetermined time has passed since the operation of the operation switch 32 or 33, thereby enabling to suppress a frequent sound output and to improve the operability.

The operation monitoring apparatus of a nuclear power plant according to the present invention is not limited to the configuration in the embodiment described above. For example, a microphone can be connected to the control device 34 and a sound recognizer can be provided to determine whether the operation content called by an operator and the operation content operated by the operation switch match each other. In this case, when having determined that the operation content called by the operator and the operation content by the operation switch match each other, the control device 34 permits to perform the operation. When having determined that these contents do not match each other, the control device 34 does not permit to perform the operation.

### Industrial Applicability

As described above, according to the operation monitoring apparatus of a nuclear power plant according to the present invention, a sound output device that outputs a name of a device corresponding to an operation switch selected by an operation panel is provided, and thus occurrence of erroneous operations in a nuclear power plant can be suppressed, thereby ensuring highly safe operations, and the present invention can be applied to any type of nuclear power plants.

### Reference Signs List

11 central control room
12 first operation console
13 second operation console
14 administrator console
15 large display
21 first operation surveillance monitor
22 second operation surveillance monitor
31 operation panel
32, 33 operation switch
34 control device
35 nuclear power facility
36 A pump (device)
37 B on-off valve (device)
38 sound output device
39 speaker

## Claims

1. An operation monitoring apparatus of a nuclear power plant, comprising:
an operation panel having a plurality of operable operation switches;
a control device that can control driving of devices in a nuclear power plant in response to an operation of the operation switch; and
a sound output device that outputs a name of a device corresponding to the operation switch selected by the operation panel as sound.

2. The operation monitoring apparatus of a nuclear power plant according to claim 1, wherein the sound output device outputs a state of the device corresponding to the selected operation switch as sound.

3. The operation monitoring apparatus of a nuclear power plant according to claim 1, wherein the sound output device outputs an operation content of the operated operation switch as sound.

4. The operation monitoring apparatus of a nuclear power plant according to any one of claims 1 to 3, wherein the sound output device outputs a result of drive control of the device performed by the control device in response to the operated operation switch as sound.

5. The operation monitoring apparatus of a nuclear power plant according to any one of claims 1 to 3, wherein the sound output device outputs sound after a preset predetermined time has passed since an operation of the operation switch.
